# EUROPÄISCHE PATENTANMELDUNG

(11) **EP 1 371 277 A1**
(43) Veröffentlichungstag der Anmeldung: **17.12.2003**
(21) Anmeldenummer: 03013628.7
(22) Anmeldetag: 16.06.2003
(51) Int. Cl.: A01D 34/82, H02G 11/00

(54) **Kabelführungsvorrichtung für Zuleitungen für ein fahrbares Gerät sowie Befestigungsvorrichtung für eine Kabelführungsvorrichtung**

(30) Priorität: 15.06.2002 DE 20209355 U; 21.07.2002 DE 20210971 U; 09.08.2002 DE 20212434 U; 20.08.2002 DE 20212905 U; 14.11.2002 DE 20217573 U; 04.02.2003 DE 20301641 U; 23.04.2003 DE 20306350 U; 02.06.2003 DE 20308640 U
(71) Anmelder: Kreiss, Burkhard, Prof., 32584 Löhne (DE)
(72) Erfinder: Kreiss, Burkhard, Prof., 32584 Löhne (DE)
(74) Vertreter: Schumacher, Horst, Dr. Dipl.-Phys.

(57) **Zusammenfassung**

Die Erfindung betrifft eine Kabelführungsvorrichtung für Zuleitungen für ein fahrbares Gerät, mindestens ein längliches Führungselement, ein Halteelement und eine Befestigungsvorrichtung aufweisend, bei der das Führungselement in einem ersten Bereich seines dem Gerät zugewandten Endes mit einer am Gerät angebrachten ersten Befestigungsvorrichtung gelenkig verbunden ist, sowie eine Befestigungsvorrichtung für eine Kabelführungsvorrichtung für Zuleitungen für ein fahrbares Gerät, **dadurch gekennzeichnet, daß** das Führungselement (12) in einem einen, insbesondere veränderlichen, Abstand zu dem ersten Bereich (18') aufweisenden zweiten Bereich (18") gelenkig mit mindestens einem länglichen Halteelement (14) verbunden ist, welches gelenkig mit dem Gerät (100) oder mit einer am Gerät angebrachten zweiten Befestigungsvorrichtung (16) verbunden ist, so daß die Menge aller durch das Führungselement (12) prinzipiell erreichbaren Positionen bei gegebener Wirklänge des länglich ausgebildeten Halteelements (14) im wesentlichen ein Ellipsoidausschnittvolumen oder einen Teil davon beschreibt.

## Beschreibung

Die Erfindung betrifft eine Kabelführungsvorrichtung für Zuleitungen für ein fahrbares Gerät, mindestens ein längliches Führungselement, ein Halteelement und eine Befestigungsvorrichtung aufweisend, bei der das Führungselement in einem ersten Bereich seines dem Gerät zugewandten Endes mit einer am Gerät angebrachten ersten Befestigungsvorrichtung gelenkig verbunden ist, sowie eine Befestigungsvorrichtung für eine Kabelführungsvorrichtung für Zuleitungen für ein fahrbares Gerät.

Bei elektrisch betriebenen fahrbaren Geräten, wie beispielsweise Rasenmähern, besteht immer die Gefahr, daß die zur Stromversorgung des Gerätes notwendigen Zuführungsleitungen in den Arbeitsbereich gelangen und sich dabei störend auf den Betrieb bzw. die Benutzung auswirken oder schlimmstenfalls während des Betriebs sogar beschädigt oder zerstört werden können.

Aus dem Stand der Technik sind Vorrichtungen bekannt, die die Zuleitung von einer Seite her straffen beziehungsweise ordnen (DE 645517 C, DE 19639746 C2 oder DE 9419063 U1), dabei aber wenig universell einsetzbar sind und zudem ein größerer Aufwand beim Auf- bzw. Abbau aufgebracht werden muß.

Weiterhin ist eine Vorrichtung bekannt, die die Leitung auf dem Gerät selbst seitlich heraus führt (NL 6604968 A), dabei jedoch den Nachteil aufweist, daß sie die Zuleitung nicht weit genug vom Gerät weg führt und die Vorrichtung beim Arbeiten unter Hecken oder Einbauten behindert.

Ähnliche Vorrichtungen, die jedoch zusätzlich mit einer Rückholvorrichtung für die Leitung ausgestattet sind, sind der DE 1582493 C3 und der CH 611244 A zu entnehmen. Die dort beschriebenen Lösungen sind jedoch technisch recht aufwendig beziehungsweise in ihrer Einsatzfähigkeit eingeschränkt.

Eine weitere bekannte Kabelführungsvorrichtung führt die Zuleitung am hinten liegenden Bedienungsgestänge des Geräts seitlich heraus, bei der im einen Fall das Gelenk innerhalb der Zuführungsstange liegt, wobei Bauart bedingt hohe Beanspruchungskräfte auftreten (FR 2812466 A1) und im anderen Fall der seitliche Überstand nur gering und somit wenig wirkungsvoll ist (EP 379000 B1). Bei beiden ist ein Wenden "über den Bug" mit Schwierigkeiten verbunden. In allen Fällen, in denen Gelenkverbindungen eingesetzt werden, sind sie relativ aufwendig, um den über die Zuleitung auf sie einwirkenden Querkräften standzuhalten.

Einen gattungsgemäßen Kabelhalter für elektrische Rasenmäher, der durch einen am Schubgestänge des Rasenmähers befestigten Steg mit einem in der Mitte angeordneten Schwenkgelenk und durch einen an dem Schwenkgelenk gelagerten, um angenähert 180° schwenkbaren nur in zwei Endpositionen von einem starren Halterelement aufgenommen Ausleger, längs welchem das Kabel befestigbar ist, gekennzeichnet ist, ist der CH 601962 A zu entnehmen. Bei diesem nur in einer Ebene schwenkbaren Ausleger ist lediglich eine wenig variable Handhabung erlaubt.

Davon ausgehend liegt der Erfindung die Aufgabe zugrunde, eine Kabelführungsvorrichtung bereitzustellen, die bei hoher Benutzerfreundlichkeit ohne hohen Aufwand bestellbar ist.

Zur Lösung dieser Aufgabe wird eine Vorrichtung der eingangs bezeichneten Art vorgeschlagen, bei der das Führungselement in einem zweiten Bereich gelenkig mit einem länglichen Halteelement verbunden ist, welches gelenkig mit dem Gerät oder mit einer am Gerät angebrachten zweiten Befestigungsvorrichtung verbunden ist, so daß die Menge aller durch das Führungselement prinzipiell erreichbaren Positionen bei gegebener Wirklänge des Halteelements im wesentlichen ein Elliposoidausschnittvolumen oder einen Teil davon beschreibt. Hierdurch wird unter anderem erreicht, daß nur wenige Bauteile benötigt werden und das Schwenklager vergleichsweise wenig belastet wird. Zudem können vergleichsweise große Ausladungen ermöglicht werden, die sowohl einfach erreicht werden, aber auch mit wenig Aufwand begrenzbar sind.

Ein weiterer Aspekt der Erfindung besteht darin, eine Befestigungsvorrichtung für eine Kabelführungsvorrichtung bereitzustellen, die die von der Kabelführungsvorrichtung ausgehenden Kräfte aufnimmt und somit die Übertragung auf das Gerät, was unter Umständen zu einer einseitigen Belastung oder gar einem Umkippen des Geräts führen könnte, effektiv reduziert. Hierzu wird eine Vorrichtung vorgeschlagen, bei der die Trageinrichtung zur gelenkigen Aufnahme eines Führungselements an einer Gelenkplatte anbringbar ist, wobei die Gelenkplatte von an dem Gerät befestigbaren Zugelementen gehalten wird.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so daß die in dem Anwendungsgebiet bekannten Auswahlkriterien uneingeschränkt Anwendung finden können.

Weitere Einzelheiten, Merkmale und Vorteile des Gegenstands der Erfindung ergeben sich aus den Unteransprüchen sowie aus der nachfolgenden Beschreibung der zugehörigen Zeichnungen, in denen - beispielhaft - Ausführungsbeispiele der erfindungsgemäßen Kabelführungsvorrichtung und der Befestigungsvorrichtung für eine Kabelführungsvorrichtung dargestellt sind. In den Zeichnungen zeigen:
- Fig.1: eine an einem Gerät angebrachte Kabelführungsvorrichtung in drei unterschiedlichen Position, senkrecht (I), nahezu horizontal nach links (II) und nahezu horizontal nach rechts (III);
- Fig. 2: eine Ausführungsform des Führungselements mit innen verlaufender Zuleitung in der Draufsicht;
- Fig. 3: eine an dem Bedienungsgestänge angebrachte Befestigungsvorrichtung ohne Trageinrichtung in der Draufsicht;

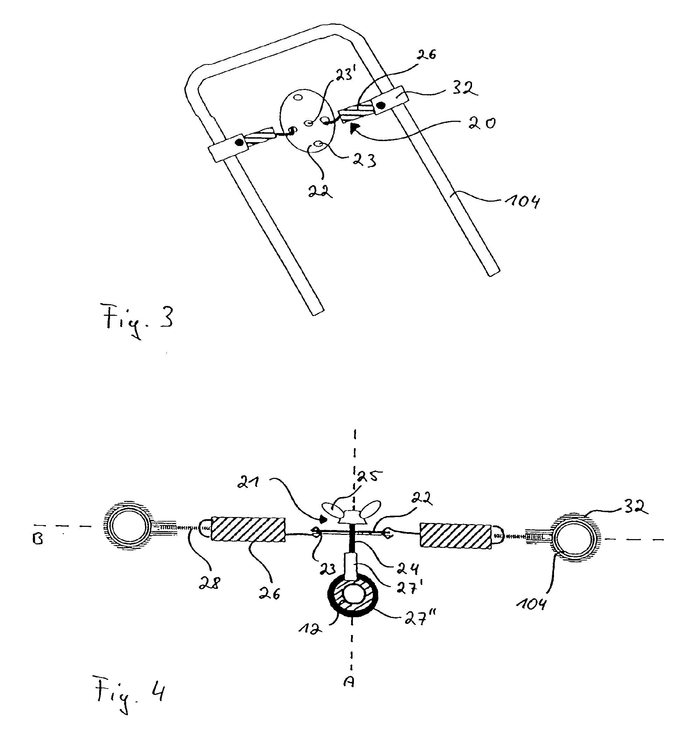

- Fig. 3: eine an dem Bedienungsgestänge angebrachte Befestigungsvorrichtung mit Trageinrichtung und Führungselement zum Teil in Schnittdarstellung.

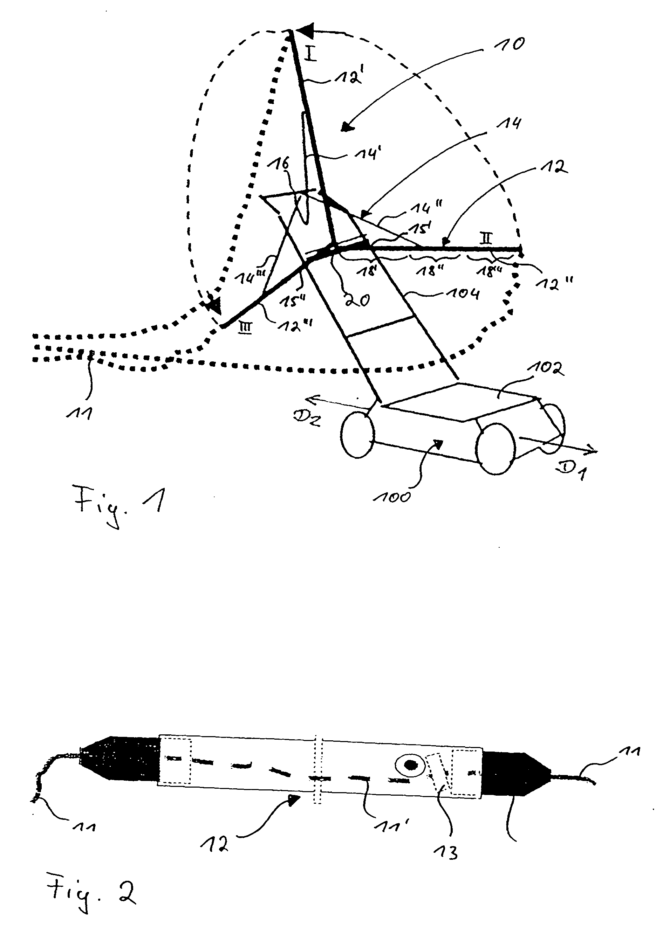

Die aus Figur 1 ersichtliche Kabelführungsvorrichtung 10 umfaßt ein Führungselement 12, das mit seinem dem Gerät 100, hier ein konventioneller Rasenmäher, zugewandten Endbereich 18' an einer ersten Befestigungvorrichtung 20 gelenkig angebracht ist, ein längliches flexibles Halteelement 14 wie eine Kette, ein Seil oder ein Band, welches mit seinem einen Ende gelenkig an einem mittleren Bereich 18" des Führungselements 12 und mit dem zweiten Ende oder Endbereich an dem Handgriff des Bedienungsgestänges 16 des Geräts 100 angebracht ist.

Figur 1 zeigt das Führungselement 12 in drei unterschiedlichen Positionen 12',12" und 12"'. Bei der mit (I) bezeichneten vertikalen Position 12' des Führungselements 12 weist die Kabelführungsvorrichtung eine die Höhe einer das Gerät bedienenden Person übersteigenden Gesamthöhe auf, so daß bei einem Wenden "über den Bug", die Zuleitung 11 mittels der Kabelführungsvorrichtung 10 über den Kopf des Benutzers geführt werden kann. Während des Betriebs, kann das Führungselement 12 in einer maximalen Ausladung 12" bzw. 12'" nach links (II) bzw. nach rechts (III) positioniert und dabei von dem Halteelement 14 zum Teil getragen werden; den übrigen Teil trägt eine Befestigungsvorrichtung 20. Das Halteelement 14 ist hinsichtlich seiner wirksamen Länge variierend an dem Handgriff 16 befestigbar, so daß der maximale Abstand zwischen Befestigungspunkt am Handgriff und Befestigungspunkt am Führungselement 12 eingestellt werden kann, was die maximale Neigung des Führungselements 12 definiert. In der maximalen Ausladung nach rechts oder links wird die Zuleitung 11 mit einem ausreichenden Abstand von dem Gerät 100 ferngehalten, so daß während des Betriebs eine Beschädigung oder gar Zerstörung der Zuleitung 11 zuverlässig ausgeschlossen werden kann.

In der Figur 1 erfüllt die erste Befestigungsvorrichtung 20 unter anderem die bevorzugte Funktion eines Gelenks mit mehreren Freiheitsgraden - wie bei einem Kugelgelenk. Aufgrund des Halteelements 14 wird die Bewegung des Führungselements so eingeschränkt, daß die Menge aller durch das Führungselement bei gegebener Wirklänge des Haltelements prinzipiell erreichbaren Positionen ein Ellipsoid- bzw. vorzugsweise eine Kugelausschnittvolumen beschreiben würde. Der Term "prinzipiell" umschreibt dabei den Umstand, daß die bei einem gegebenenfalls die Bewegung einschränkenden Gerät und/oder dessen Gestänge sowie die bei einer möglichen Ausführungsform, bei der das Führungselement eine nicht exakt einer Geraden entsprechende Bauform aufzeigt, auftretende Asymmetrie des bezeichneten Ellipsoidausschnittvolumens bei der Definition unberücksichtigt gelassen wird. In dem dargestellten und insoweit bevorzugten Ausführungsbeispiel kann das stab- oder rohrförmige Führungselement 12 alle Positionen eines durch das Geräte-Bedienungsgestänge 104 einseitig begrenzten etwa halben Kugelausschnittvolumens einnehmen.

Bewegt eine Person beispielsweise ein Rasenmähergerät 100 während des Mähens in eine erste Fahr-Richtung D1, kann das Führungselement in eine seiner maximalen Ausladungen 12" oder 12"' positioniert werden, um die Zuleitung 11 in einem möglichst weiten Abstand von dem Rasenmähergerät 100 fernzuhalten, so daß ein gefahrloses Mähen ermöglicht wird. Dabei liegt es in der Regel an einem seitlichen Teil des Bedienungsgestänges 104 an. Erreicht die Person mit dem Rasenmähergerät nun eine Wendeposition, kann das Gerät 100, beispielsweise auf seinen Hinterrädern, um 180° in Richtung des Führungselements gedreht werden. Die durch die kugelgelenkartige Lagerung des Führungselements 12 ermöglichte Bewegungsfreiheit erlaubt bei diesem Wenden, daß das von der das Gerät 100 bedienenden Person gehaltene und bewegte Führungselement 12 die Zuleitung sicher über das sich unter dem Führungselement 12 drehende Rasenmähergerät und die Person führt. Hierbei kann das Führungselement z. B. den in Fig. 1 gezeigten Positionswechsel von der Pos. II über die Pos. I zur Pos. III vornehmen. Eine über den Kopf der Person verlaufende Position des oberen Endes des Führungselements ist auch dann vorteilhaft, wenn das Rasenmähergerät unter Büsche oder Bäume gefahren werden muß, um dort eventuell vorhandene Rasenflächen zu mähen. Die zusätzliche Befestigung mittels des Halteelements 14 hält das Führungselement in einer stabilen im wesentlichen horizontalen oder auch nach unten geneigten Endposition. Genauso ist jedoch auch ein Fahrtrichtungswechsel von der Richtung D1 in die entgegengesetzte Richtung D2 möglich, bei der die Zuleitung 11 dann automatisch von dem Führungselement frei geführt wird.

Figur 2 zeigt eine Ausführungsform eines Führungselements 12, welches rohrförmig hohl ist und durch das eine Zuleitung 11, 11' geführt wird. Der innen liegende Zuleitungsteil 11' kann mittels einer Klammer 13 innerhalb des Führungselement 12 und mittels einer Tülle 17 an den Enden der Führungselements befestigt werden. Die, vorzugsweise elastische, Tülle 17 kann eine zu hohe Knickbelastung der Zuleitung 11 und zudem das Eindringen von Feuchtigkeit und/oder Wasser verhindern.

Figur 3 zeigt die am Bedienungsgestänge 104 angebrachte Befestigungsvorrichtung 20, die eine Gelenkplatte 22 mit Aufnahmeöffnungen 23, die zur Aufnahme von elastischen Zugelementen 26, insbesondere Spiralfedern, dienen, und eine Zentrale Aufnahmeöffnung 23' aufweist. Die Zugelemente 26 sind mit Montiereinrichtungen 32 an dem Bedienungsgestänge 104 befestigt.
In montierter Form als erste Befestigungsvorrichtung für ein Führungselement 12, erlaubt die Befestigungsvorrichtung 20 das effektive Reduzieren von Belastungsspitzen und das Dämpfen von Schwingungen, die während der Arbeit mit einem Rasenmäher und zwar auch über zum Teil unebenes Gelände auftreten können.
Dabei tritt die vorteilhafte Wirkungsweise der Befestigungsvorrichtung 20 insbesondere in den Situationen zu Tage, in der sich das Führungselement 12 in einer seiner maximalen Ausladepositionen 12" oder 12"' befindet. In diesen Extremalpositionen erfährt das Führungselement 12 durch ein Aufliegen auf dem Bedienungsgestänge 104 einen weiteren dritten Lagerpunkt 15' oder 15", welcher neben der Befestigungsvorrichtung 20 und der Haltevorrichtung 14 auf das Führungselement 20 einwirken kann. Dieser zusätzliche Lagerpunkt 15', 15" kann nun nachteilig als Hebellager wirken, so daß sich eine auf das vom Gerät wegführende Ende des Führungselements 12 angreifende Kraft über das besagte Hebellager auf das zum Gerät hinführende Ende und somit auf die Befestigungsvorrichtung 20 übertragen würde, was zu ungewollten Belastungen führen und damit ein etwaiges Kippen des insbesondere Rasenmähers bewirken könnte, wenn nicht die federelastische Bauart der Befestigungsvorrichtung 20 dies mehr oder minder sanft dreidimensional abfedern würde.

Die aufgrund der elastischen Zugelement 26 flexibel gestaltete Befestigungsvorrichtung 20 kann nämlich die übertragenen Kräfte sowie die daraus resultierende Bewegung des Führungselements 12 aufnehmen. Dabei kommt der Befestigungsvorrichtung zu Gute, daß die Länge des Lastarms, also die durch den Abstand zwischen drittem Lagerpunkt 15', 15" und dem vom Gerät wegführenden Ende des Führungselements 12 definierte Länge, deutlich größer ist als die Länge des Kraftarms, also die durch den Abstand zwischen drittem Lagerpunkt 15', 15" und dem zum Gerät hinführenden Ende des Führungselements 12 definierte Länge.

Aus Figur 4 ist die Befestigungsvorrichtung 20 nach Fig. 3 zum Teil in Schnittdarstellung zu sehen. Dabei wird durch die Zentrale Aufnahmeöffnung 23' der Gelenkplatte 22 ein Lagerbolzen 24 eingeführt, welcher auf der einen Seite eine an das Führungselement starr angebrachte Halterung 27', 27" aufweist und auf der anderen Seite mit einer Flügelschraube 25 gesichert ist. Durch die mögliche Drehung um die Längsrichtung B der elastischen Zugelemente 26 bzw. der starren Zugelemente 28 und die Drehbarkeit des Lagerbolzens um seine Achse A, wird dem Führungselement 12 eine Beweglichkeit, die mit der durch ein Kugelgelenk bereitgestellten vergleichbar ist, ermöglicht. Die vorzugsweise federähnlichen Zugelemente 26 können dabei die von dem Führungselement 12 ausgehenden und sowohl in Quer-, als auch in Längsrichtung des Führungselements verlaufenden Kräfte elastisch aufnehmen, so daß Kraftübertragungsspitzen und eine damit verbundene einseitige Belastung des Geräts verhindert wird.

Durch die Erfindung, insbesondere die in der Zeichnung dargestellte Ausführungsform, werden unter anderem folgende Vorteile erreicht:
a) Schwenkbar über Kopf von einer Seite auf die andere, das Kabel liegt nie zwischen dem Rasenmäher und der diesen bedienenden Person.
b) Stufenlos arretierbar innerhalb des gesamten Schwenkbereichs.
c) Die seitliche Auslage im Normalbetrieb kann ohne weiteres 1m betragen, was eine hohe Sicherheit gegen das Überfahren des Kabels gewährleistet. Dabei ist es möglich zwei mal gegen die eigene Mähspur noch weiter nach außen zum Kabel hin mähen. Die Größe der seitlichen Ausladung beinträchtig - abgesehen vom Eigengewicht - die Sicherheit nicht, weil sie nur ein Drehmoment um die Hochachse erzeugt. Die relativ große seitliche Ausladung benachteiligt die Manövrierfähigkeit bei Hindernissen jedoch nicht, weil man das Führungselement einfach in die Hand zu nehmen und dadurch leicht führbar ist.
d) Die Höhe der Kabelaufhängung ist im Normalbetrieb, niedriger als beim ordnungsgemäßen Einhängen am Schubgestänge des normalen, handelsüblichen Rasenmähers, was das Gewicht des frei nach unten hängenden Kabelteils verringert und die hier systembedingte Verschlechterung des Kippmoments infolge des größeren Hebelarms teilweise wieder aufhebt.
e) Beim Mähen unter Büschen und Hindernissen kann das Kabel nach hinten und seitlich -hinten ausgelegt werden und ist nicht im Wege.
f) Das Lager und die Aufhängung sind leicht, einfach gestaltet und nur gering belastet, dadurch kostengünstig und verschleißarm.
g) Die federnde Aufhängung kappt alle Belastungsspitzen, beispielsweise infolge von Hindernissen oder verheddertem Kabel und gibt dem Benutzer Zeit, angemessen zu reagieren, das schont das Material und erhöht die Sicherheit.
h) Die den Rasenmäher bedienende Person kann nach Belieben (oder nach Zweckmäßigkeit) "wenden" oder "halsen" und ist dadurch beim Mähen flexibel.
i) Die Kabelführungsvorrichtung ist an fast jeden Rasenmäher mühelos, auch nachträglich, anbringbar und dabei mühelos an- und abzubauen.

### Bezugszeichenliste

- 10: Kabelführungsvorrichtung
- 11: Zuleitung
- 11': Zuleitung innen liegend
- 12: Führungselement
- 12': Führungselement senkrecht
- 12": Führungselement nahezu horizontal nach links
- 12": Führungselement nahezu horizontal nach rechts
- 13: Klammer
- 14: Halteelement
- 14': Halteelement das Führungselement senkrecht haltend
- 14": Halteelement das Führungselement nach links haltend
- 14"': Halteelement das Führungselement nach rechts haltend
- 15': rechter dritter Lagerpunkt
- 15": linker dritter Lagerpunkt
- 16: zweite Befestigungsvorrichtung
- 17: elastische Tülle
- 18': erster Bereich
- 18": zweiter Bereich
- 18"': dem Gerät abgewandter Bereich
- 20: erste Befestigungsvorrichtung

- 21: Trageinrichtung
- 22: Gelenkplatte
- 23: Aufnahmeöffnung
- 23': zentrale Aufnahmeöffnung
- 24: Lagerbolzen
- 25: Flügelschraube
- 26: elastisches Zugelement

- 27': Halterung
- 27": Halterung
- 28: starres Zugelement
- 32: Montiereinrichtung

- 100: Gerät
- 102: Gerätegehäuse
- 104: Bedienungsgestänge

- A: erste Achse
- B: zweite Achse

- D1: erste Fahrrichtung
- D2: zweite Fahrrichtung

## Patentansprüche

1. Kabelführungsvorrichtung für Zuleitungen für ein fahrbares Gerät, mindestens ein längliches Führungselement (12), ein Halteelement (14) und eine erste Befestigungsvorrichtung (20) aufweisend, bei der das Führungselement (12) in einem ersten Bereich (18') seines dem Gerät (1009 zugewandten Endes mit einer am Gerät (100) angebrachten ersten Befestigungsvorrichtung (20) gelenkig verbunden ist,
**dadurch gekennzeichnet, daß**
das Führungselement (12) in einem einen, insbesondere veränderlichen, Abstand zu dem ersten Bereich (18') aufweisenden zweiten Bereich (18") gelenkig mit mindestens einem länglichen Halteelement (14) verbunden ist, welches gelenkig mit dem Gerät (100) oder mit einer am Gerät angebrachten zweiten Befestigungsvorrichtung (16) verbunden ist, so daß die Menge aller durch das Führungselement (12) prinzipiell erreichbaren Positionen bei gegebener Wirklänge des länglich ausgebildeten Halteelements (14) im wesentlichen ein Ellipsoidausschnittvolumen oder einen Teil davon beschreibt.

2. Kabelführungsvorrichtung nach Anspruch 1, **dadurch gekennzeichnet, daß** das Halteelement (14) längenveränderbar und/oder formveränderbar ist.

3. Kabelführungsvorrichtung nach Anspruch 1 oder 2, **dadurch gekennzeichnet, daß** das Halteelement (14) starr oder vorzugsweise flexibel, ein- oder mehrteilig, gegebenenfalls teleskopisch ein- und ausfahrbar gestaltet ist.

4. Kabelführungsvorrichtung nach einem der Ansprüche 1 bis 3, **dadurch gekennzeichnet, daß** das Halteelement (14) eine Kette, ein Band, ein Seil, ein seilähnliches oder ein gummibandähnliches Element ist.

5. Kabelführungsvorrichtung nach einem der Ansprüche 1 bis 4, **dadurch gekennzeichnet, daß** das Halteelement (14) an mindestens einem seiner Enden oder Endbereichen Schlaufen oder Adapterelemente, insbesondere längenveränderliche, zur Befestigung aufweist.

6. Kabelführungsvorrichtung nach einem der Ansprüche 1 bis 5, **dadurch gekennzeichnet, daß** die erste (20) und/oder zweite (16) Befestigungsvorrichtung am Bedienungsgestänge (104) des Geräts (100) anbringbar ist.

7. Kabelführungsvorrichtung nach Anspruch 6, **dadurch gekennzeichnet, daß** die erste (20) und/oder zweite (16) Befestigungsvorrichtung eine starr oder flexibel gestaltete, ein- oder mehrteilige, aus zug- und/oder druckstarren Elementen bestehende, gegebenenfalls in ihrer Länge veränderbare Verbindung aufweist, die am Bedienungsgestänge (104), insbesondere mit ihren Enden an den Holmen des Bedienungsgestänges (104) des Geräts (100) anbringbar ist.

8. Kabelführungsvorrichtung nach einem der Ansprüche 1 bis 7, **dadurch gekennzeichnet, daß** das Führungselement (12) eine Länge aufweist, die so gewählt wird, daß das dem Gerät (100) abgewandte Ende des an dem Gerät (100) angebrachten Führungselements (12) in aufrechter Position eine Gesamthöhe erreicht, die in etwa der Größe einer das Gerät (100) bedienenden Person erreicht oder übersteigt.

9. Kabelführungsvorrichtung nach einem der Ansprüche 1 bis 8, **dadurch gekennzeichnet, daß** das Führungselement (12) mehrteilig und dabei insbesondere teleskopisch aus- und einfahrbar ist.

10. Kabelführungsvorrichtung nach einem der Ansprüche 1 bis 9, **dadurch gekennzeichnet, daß** das Führungselement (12), insbesondere an seinem dem Gerät (100) abgewandten Bereich (18"'), flexibel gestaltet ist.

11. Kabelführungsvorrichtung nach einem der Ansprüche 1 bis 10, **dadurch gekennzeichnet, daß** das Führungselement (12) rohrförmig hohl ist, insbesondere zur Aufnahme von Leitungen (11, 11') dient, die durch das Führungselement (12) gezogen werden können.

12. Kabelführungsvorrichtung nach Anspruch 11, **dadurch gekennzeichnet, daß** das Führungselement (12) an seinen Enden mit insbesondere elastischen, schlauchförmigen oder spiralförmigen Ansatzstücken ausgestattet ist, die eine sichere Befestigung von Leitungen (11, 11') erlauben.

13. Kabelführungsvorrichtung nach einem der Ansprüche 1 bis 12, **dadurch gekennzeichnet, daß** das Führungselement (12) mit einer offenen Längsnut (Keep) ausgestattet ist, durch welche die Leitungen (11, 11') von der Seite her in das Rohr hinein gedrückt und wieder entfernt werden können.

14. Kabelführungsvorrichtung nach einem der Ansprüche 1 bis 13, **dadurch gekennzeichnet, daß** Führungselement mit einer bereits in oder am Führungselement (12) angebrachten Leitung (11, 11') und mit an dieser angeschlossenen Anschlußkupplungen ausgestattet ist.

15. Befestigungsvorrichtung für eine Kabelführungsvorrichtung für Zuleitungen für ein fahrbares Gerät, insbesondere nach Anspruch 1, mindestens eine Gelenkplatte (22), eine Trageeinrichtung (21) und zwei Zugelemente (26, 28) aufweisend, bei dem die Trageeinrichtung (21) zur gelenkigen Aufnahme eines Führungselements (12) an der Gelenkplatte (22) anbringbar ist, wobei die Gelenkplatte (22) von den an dem Gerät (100) befestigbaren Zugelementen (26, 28), insbesondere federelastisch, gehalten wird.

16. Befestigungsvorrichtung nach Anspruch 15, **dadurch gekennzeichnet, daß** die Trageinrichtung (21) einen drehbaren Lagerbolzen (24) aufweist, welcher an einer Aufnahmevorrichtung (23') der Gelenkplatte (22) befestigbar ist und vorzugsweise senkrecht zu der durch die Gelenkplatte (22) definierten Ebene steht.

17. Befestigungsvorrichtung nach einem der Ansprüche 15 bis 16, **dadurch gekennzeichnet, daß** die Befestigungsvorrichtung (20) mittels einer Montiereinrichtung (32) an dem Bedienungsgestänge (104), insbesondere klammbar, anbringbar ist.

18. Befestigungsvorrichtung nach einem der Ansprüche 15 bis 17, **dadurch gekennzeichnet, daß** die Gelenkplatte (22) mehrere zur Aufnahme der Zugelemente (26, 28) dienenden Aufnahmevorrichtungen, insbesondere Aufnahmeöffnungen (23), aufweist, welche in unterschiedlichen Abständen zueinander angeordnet sein können.

19. Befestigungsvorrichtung nach einem der Ansprüche 16 bis 19, **dadurch gekennzeichnet, daß** die Zugelemente (26) in ihrer Längsrichtung und gegebenenfalls in ihrer Querrichtung liegende Zugkräfte elastisch aufnehmen können.

20. Befestigungsvorrichtung nach einem der Ansprüche 16 bis 20, **dadurch gekennzeichnet, daß** die Zugelemente (26, 28) um ihre Längsachse (B) drehbeweglich sind.
